# EUROPÄISCHE PATENTSCHRIFT

(11) **EP 1 321 693 B1**
(45) Veröffentlichungstag und Bekanntmachung des Hinweises auf die Patenterteilung: **02.11.2005**
(21) Anmeldenummer: 02026510.4
(22) Anmeldetag: 27.11.2002
(51) Int. Cl.: F16F 9/04

(54) **Doppelrollbalg-Federungseinrichtung**
Double rolling lobe spring assembly
Ensemble ressort à double soufflet roulant

(30) Priorität: 22.12.2001 DE 10163819
(43) Veröffentlichungstag der Anmeldung: 25.06.2003
(73) Patentinhaber: ContiTech Luftfedersysteme GmbH, 30165 Hannover (DE)
(72) Erfinder: Thurow, Gerhard, 30823 Garbsen (DE); Bank, Christoph, 31275 Lehrte (DE); Cerny, Paul, 30974 Wennigsen (DE); Gönnheimer, Peter, 71384 Weinstadt (DE); Frey, Joachim, 73614 Schorndorf (DE)
(74) Vertreter: Finger, Karsten

(56) Entgegenhaltungen:
- WO-A-01/14765
- DE-A- 10 038 197
- DE-A- 19 952 799
- DE-U- 29 823 508

## Beschreibung

Die Erfindung betrifft eine Doppelrollbalg-Federungseinrichtung gemäß dem Oberbegriff des Anspruchs 1, wie sie aus der DE 199 52 799 vorbekannt ist.

Die DE 199 52 799 beschreibt eine Federungseinrichtung mit Doppelrollbalg. Man kann sich vorstellen, dass eine solche Federungseinrichtung aus zwei spiegelbildlich zueinander angeordneten (Luft-)Federelementen aufgebaut ist. Jedes der beiden Federelemente besteht im wesentlichen aus einem Rollbalg und einem Abrollkolben. Auf eine bei einer üblichen Luftfeder erforderliche Abdeckplatte kann verzichtet werden, da eine Stützeinrichtung ("Stützglocke", "Außenmantel") zur seitlichen Begrenzung der Rollbälge vorgesehen ist. In bevorzugten Ausführungsformen bilden die beiden Rollbälge ein einziges Stück, d. h. die beiden Rollbälge bilden einen Doppelrollbalg. Die Abrollkolben sind endseitig und der Außenmantel ist beidendig leicht konisch ausgebildet.

Beim Einfederungsvorgang wird der eine Teil des Doppelrollbalgs mit Hilfe des einen Abrollkolbens komprimiert, während gleichzeitig der andere Teil des Doppelrollbalgs mit Hilfe des anderen Abrollkolbens entlastet wird. Wegen der Konizität von Außenmantel und Abrollkolben ergibt sich eine Oben/Unten-Asymmetrie, was zur Folge hat, dass sich die Wirkdurchmesser der beiden Rollfalten verändern, woraus eine weiche Federwirkung resultiert.

Eine Oben/Unten-Asymmetrie kann statt mittels Konizität von Abrollkolben und/oder Außenmantel auch durch unterschiedlich weite Abrollkolben und/oder einen oben und unten unterschiedlich weiten Außenmantel realisiert werden.

Im Unterschied zu einfachen Luftfedern weisen Doppelrollbalg-Federungseinrichtungen gute Führungseigenschaften auf, so dass auf Lenker gänzlich oder zumindest weitgehend verzichtet werden kann. Aufgrund der Oben/Unten-Asymmetrie wirken aber beträchtliche axiale Kräfte zwischen dem Abrollkolben-Paar einerseits und dem Außenmantel andererseits. Aus diesem Grunde ist es unbedingt erforderlich, den Doppelrollbalg an der Innenseite des Außenmantels zu fixieren. Wie diese notwendige Fixierung realisiert werden könnte, ist aus dem derzeitigen Stand der Technik nicht zu entnehmen.

Die Aufgabe der Erfindung besteht darin, an einer Doppelrollbalg-Federungseinrichtung der eingangs genannten Art eine zuverlässig wirksame Fixierung des Doppelrollbalgs an der Innenseite des Außenmantels zu schaffen.

Gemäß Anspruch 1 wird diese Aufgabe dadurch gelöst, dass der Doppelrollbalg mittig einen innenliegenden Stützring aufweist, der umfangsseitig mit einer radialen Vertiefung versehen ist, und wobei der Außenmantel an seiner Innenseite eine umlaufend aufgesetzte Erhebung aufweist, die in die umfangsseitig radiale Vertiefung des Stützringes eingreift und somit eine Klemmkontur bildet. Auf diese Weise wird der Doppelrollbalg an der Innenseite des Außenmantels an vorgegebener Stelle zuverlässig fixiert. Ein Verrutschen des Rollbalgs längs der inneren Wandfläche des Außenmantels wird somit verhindert.

Die an der Innenseite des Außenmantels befindliche Erhebung (die in die Vertiefung des Stützringes greift), kann am Schluss der Fertigung durch Rollieren erzeugt werden. Anspruch 2 gibt eine bevorzugte Dimensionierung der Klemmbefestigung an. Die bei Hochdruck-Federn auftretenden Kräfte werden sicher abgefangen.

Die Fixierung kann durch eine weitere Klemmstelle noch verbessert werden. Wenn eine zweite Klemmstelle vorgesehen ist, kann der Doppelrollbalg auch aus zwei Teil-Rollbälgen bestehen. Dabei wird das Ende des einen Rollbalgs der ersten Klemmstelle und das Ende des zweiten Rollbalgs der zweiten Klemmstelle zugeordnet. Auch in diesem Fall wird sowohl eine Fixierung als auch eine hohe Zugfestigkeit sichergestellt.

Am Beispiel zweier Ausführungsformen soll die Erfindung näher erläutert werden. Es zeigt
Fig. 1 den Längsschnitt durch eine Federungseinrichtung mit erfindungsgemäßer Klemmbefestigung eines einteiligen Doppelrollbalgs am Außenmantel;
Fig. 2 den Längsschnitt durch eine Federungseinrichtung mit erfindungsgemäßer Klemmbefestigung eines zweiteiligen Doppelrollbalgs am Außenmantel.

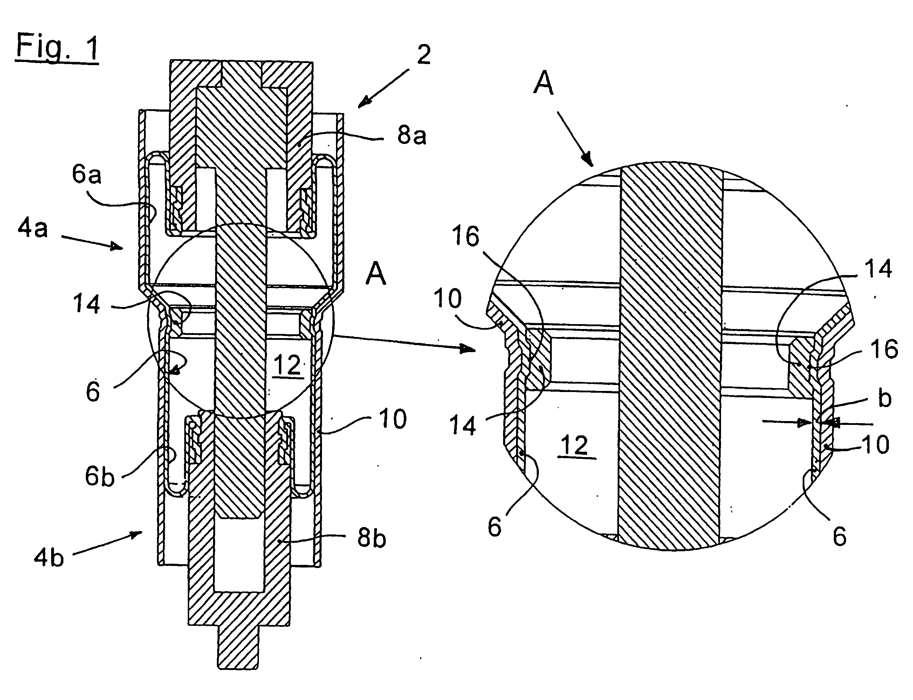

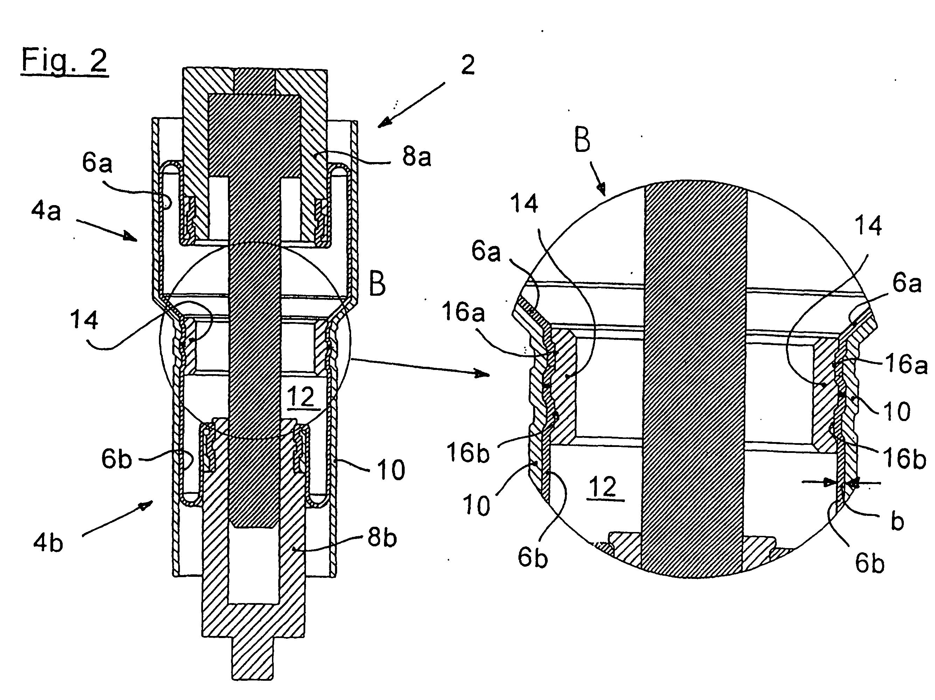

Wie die bereits eingangs erwähnte Federungseinrichtung, so besteht auch die in den Fig. 1 und Fig. 2 dargestellte Feder 2 aus zwei zueinander spiegelbildlich angeordneten Federelementen 4a und 4b mit jeweils einem Rollbalg 6a und 6b und einem Abrollkolben 8a und 8b.
In dem in Fig. 1 dargestellten Ausführungsbeispiel bilden die beiden Rollbälge 6a und 6b die ungeteilten Hälften eines Doppelrollbalgs 6, der aus elastomerem, mit Gewebeeinlage verstärktem Material besteht.

Auf eine bei üblichen Luftfedern sonst erforderliche Abdeckplatte kann hier verzichtet werden, da eine Stützeinrichtung ("Außenmantel") 10 zur seitlichen Begrenzung und Längsführung des Doppelrollbalgs 6 vorgesehen ist.

Die beiden Abrollkolben 8a und 8b weisen unterschiedliche Radien bzw. Durchmesser auf und zwar ist der Durchmesser des "oberen" Abrollkolbens 8a größer als der des "unteren" Abrollkolbens 8b. Der Außenmantel 10 ist stufig ausgebildet. Und zwar ist sein Durchmesser im Bereich des "oberen" Abrollkolbens 8a größer als im Bereich des "unteren" Abrollkolbens 8b.

Wie bei dem Einfederungsvorgang der eingangs erwähnten Federungseinrichtung, so wird auch hier der eine Teil 6b des Doppelrollbalgs 6 mit Hilfe des einen Abrollkolbens 8b komprimiert, während gleichzeitig der andere Teil 6a des Rollbalgs 6 mit Hilfe des anderen Abrollkolbens 8a entlastet wird. Die Federkraft entsteht bei der Einfederung durch die Differenz der Wirkdurchmesser. Die wirksame Fläche ist eine Kreisringfläche, begrenzt durch den Wirkdurchmesser der kleinen Falte und den Wirkdurchmesser der großen Falte. Zusätzlich entsteht eine Druckerhöhung durch Kompression des Gasvolumens im Innenraum 12 der Doppelfalte (des Doppelrollbalgs 6) bzw., falls die Federungseinrichtung 2 mit Hydraulikflüssigkeit statt mit Luft gefüllt ist, ergibt sich eine Erhöhung des Druckes in einem Druckspeicher.

Das besondere der erfindungsgemäßen Federungseinrichtung 2 besteht in einer axialen Balgwandeinspannung.
Bei einer Abstützung der Aufbauten eines Fahrzeuges mit Hilfe der Federungseinrichtung 2 wirken Kräfte zwischen Doppelrollbalg 6 und Außenmantel 10. Dabei muss ein Gleiten des Doppelrollbalgs 6 an der Innenseite des Außenmantels 10 unbedingt verhindert werden. Erfindungsgemäß wird aus diesem Grunde die Balgwand am Außenmantel 10 fixiert und zwar durch Verspannen mittels eines innenliegenden Stützringes 14 (siehe insbesondere Ausschnitte A der Fig. 1 und Ausschnitt B der Fig. 2), der sich ungefähr in der Mitte des Doppelrollbalgs 6 anstelle eines gemeinsamen Deckels befindet.

Dieser Stützring 14 weist eine radiale Vertiefung 16 auf. Durch eine radiale Verformung des Außenmantels 10 wird der Doppelrollbalg 6 in die radiale Vertiefung 16 des in der Federungseinrichtung 2 innenliegenden Stützringes 14 gedrückt und somit eine sichere Befestigung des Außenmantels 10 erreicht. Die in dem Stützring 16 eingelassene Vertiefung 16 sollte vorzugsweise ca. 0,5 x "b" und die axiale zylindrische Höhe der Vertiefung 16 ca. 3,5 x "b" betragen, wobei "b" die Wandstärke des Doppelrollbalgs 6 ist.

Die Fig. 2 zeigt den Aufbau einer vergleichbaren Federungseinrichtung 2. Hier besteht der Doppelrollbalg 6 aus zwei Teil-Rollbälgen 6a und 6b. Die Befestigung des Außenmantels 10 erfolgt hier nicht wie in Fig. 1 an einer einzigen Klemmstelle (Vertiefung 16) sondern an zwei Klemmstellen (Vertiefungen 16a und 16b). Diese Art der Schlauchrollbalg-Verspannung ist notwendig, wenn die Federungseinrichtung 2 aus zwei Teil-Rollbälgen 6a und 6b aufgebaut ist und mit noch höheren Innendrücken im Federungssystem gearbeitet wird. Die sonstigen geometrischen Verhältnisse des Stützringes 14 und des Außenmantels 10 entsprechen den zu Fig. 1 gemachten Angaben.

### Bezugszeichenliste

- 2: Federungseinrichtung, (Luft-)Feder
- 4a, 4b: Federelement
- 6a, 6b: Rollbalg
- 6: Doppelrollbalg, Balg
- 8a, 8b: Abrollkolben
- 10: Stützeinrichtung, Außenmantel, Armatur
- 12: Innenraum des Doppelrollbalgs
- 14: innenliegender Stützring
- 16: Vertiefung Stützring 14
- 16a, 16b: Vertiefungen Stützring 14

## Patentansprüche

1. Doppelrollbalg-Federungseinrichtung (2)
mit zwei gegensinnig zueinander angeordneten Federelementen (4a und 4b), die im wesentlichen aus je einem Rollbalg (6a und 6b) und je einem Abrollkolben (8a und 8b) bestehen,
wobei die beiden Rollbälge (6a und 6b) einen gemeinsamen Doppelrollbalg (6) bilden, und wobei die beiden Federelemente (4a und 4b) einen gemeinsamen Außenmantel (10) aufweisen,
**dadurch gekennzeichnet,**
**dass** der Doppelrollbalg (6) mittig einen innenliegenden Stützring (14) aufweist, der umfangsseitig mit einer radialen Vertiefung (16) versehen ist, und
wobei der Außenmantel (10) an seinem Innenumfang eine umlaufend aufgesetzte Erhebung aufweist, die in die umfangsseitig radiale Vertiefung (16) des Stützringes (14) eingreift und somit eine Klemmkontur bildet.

2. Federungseinrichtung nach Anspruch 1,
**dadurch gekennzeichnet,**
**dass** die in dem Stützring (14) befindliche radiale Vertiefung (16) ca. 0,5 x "b", und dass die axiale zylindrische Höhe der Vertiefung (16) ca. 3,5 x "b" ist,
wobei "b" die Wandstärke des Doppelrollbalgs (6) ist.

3. Federungseinrichtung nach Anspruch 1 oder 2,
**dadurch gekennzeichnet,**
**dass** der Stützring (14) eine weitere Klemmstelle aufweist (Vertiefungen 16a und 16b).

4. Federungseinrichtung nach Anspruch 3,
**dadurch gekennzeichnet,**
**dass** der Doppelrollbalg (6) aus zwei Teil-Rollbälgen (6a und 6b) besteht,
wobei der Teil-Rollbalg (6a) endseitig an der ersten Stützring-Vertiefung (16a) und der Teil-Rollbalg (6b) endseitig an der zweiten Stützring-Vertiefung (16b) eingespannt ist.

## Claims

1. Double rolling lobe suspension device (2) with two spring elements (4a and 4b) arranged opposite each other and essentially comprising a respective rolling lobe (6a and 6b) and a respective rolling piston (8a and 8b), the two rolling lobes (6a and 6b) forming a common double rolling lobe (6), and the two spring elements (4a and 4b) having a common outer casing (10), **characterized in that** the double rolling lobe (6) centrally has an inner supporting ring (14), which is circumferentially provided with a radial depression (16), and the outer casing (10) having on its inner circumference a circumferentially added elevation, which engages in the circumferentially radial depression (16) of the supporting ring (14) and thereby forms a clamping contour.

2. Suspension device according to Claim 1, **characterized in that** the radial depression (16) located in the supporting ring (14) is about 0.5 x "b", and **in that** the axial cylindrical height of the depression (16) is about 3.5 × "b", where "b" is the wall thickness of the double rolling lobe (6).

3. Suspension device according to Claim 1 or 2, **characterized in that** the supporting ring (14) has a further clamping location (depressions 16a and 16b).

4. Suspension device according to Claim 3, **characterized in that** the double rolling lobe (6) comprises two part rolling lobes (6a and 6b), the part rolling lobe (6a) being restrained at the end at the first supporting ring depression (16a) and the part rolling lobe (6b) being restrained at the end at the second supporting ring depression (16b).

## Revendications

1. Dispositif élastique (2) à double soufflet d'amortissement qui comprend deux éléments élastiques (4a et 4b) disposés en sens contraires et tous deux constitués essentiellement d'un soufflet d'amortissement (6a et 6b) et d'un piston d'amortissement (8a et 8b),
les deux soufflets d'amortissement (6a et 6b) formant un double soufflet commun d'amortissement (6), les deux éléments élastiques (4a et 4b) présentant une enveloppe extérieure (10) commune,
**caractérisé en ce que** le double soufflet d'amortissement (6) présente en son milieu une bague intérieure de soutien (14) dont la périphérie est dotée d'un creux radial (16), l'enveloppe extérieure (10) présentant à la périphérie extérieure une saillie périphérique qui s'engage dans le creux périphérique radial (16) de la bague de soutien (14) et formant ainsi un contour de pinçage.

2. Dispositif élastique selon la revendication 1, **caractérisé en ce que** le creux radial (16) situé dans la bague de soutien (14) est d'environ 0,5 x "b", la hauteur axiale du cylindre du creux (16) étant d'environ 3,5 x "b", "b" représentant l'épaisseur de la paroi du double soufflet d'amortissement (6).

3. Dispositif élastique selon les revendications 1 ou 2, **caractérisé en ce que** la bague de soutien (14) présente un autre emplacement de pinçage (creux 16a et 16b).

4. Dispositif élastique selon la revendication 3, **caractérisé en ce que** le double soufflet d'amortissement (6) est constitué de deux soufflets partiels d'amortissement (6a et 6b), le soufflet partiel d'amortissement (6a) étant serré à son extrémité contre le premier creux (16a) de la bague de soutien et le soufflet partiel d'amortissement (6b) étant serré à son extrémité sur le deuxième creux (16b) de la bague de soutien.
